# EUROPÄISCHE PATENTSCHRIFT

(11) **EP 2 157 125 B1**
(45) Veröffentlichungstag und Bekanntmachung des Hinweises auf die Patenterteilung: **12.10.2011**
(21) Anmeldenummer: 09010774.9
(22) Anmeldetag: 21.08.2009
(51) Int. Cl.: C08K 3/36, C08K 5/5419, C08K 9/06

(54) **Vulkanisierbare Kautschukmischungen sowie Elastomerformteile, erhältlich aus diesen Kautschukmischungen**
Vulcanisable rubber mixtures and elastomer moulded parts, derivable from these rubber mixtures
Mélanges de caoutchouc vulcanisables et pièces de formage élastomères obtenues à partir de ces mélanges de caoutchouc

(30) Priorität: 22.08.2008 DE 102008039218
(43) Veröffentlichungstag der Anmeldung: 24.02.2010
(73) Patentinhaber: WOCO Industrietechnik GmbH, 63628 Bad Soden-Salmünster (DE)
(72) Erfinder: Graf, Hans-Joachim, 63628 Bad Soden-Salmünster (DE)
(74) Vertreter: Weber-Bruls, Dorothée

(56) Entgegenhaltungen:
- EP-A1- 0 547 344
- WO-A1-02/06362
- WO-A1-2006/016699
- WO-A1-2009/032622
- DE-A1- 19 850 898
- PILLOW J G ET AL: "GAS-PHASE EPDM BASED ON METALLOCENE CATALYSIS//GASHASEN-EPDM, HERGESTELLT MIT DER METALLOCEN-KATALYSATOR-TECHNOLOGIE" KAUTSCHUK UND GUMMI - KUNSTSTOFFE, HUTHIG VERLAG, HEIDELBERG, DE, Bd. 56, Nr. 11, 1. November 2003 (2003-11-01), Seiten 590-594, XP001201463 ISSN: 0948-3276

## Beschreibung

Die vorliegende Erfindung betrifft vulkanisierbare Kautschukmischungen sowie Elastomerformteile, erhältlich aus diesen Kautschukmischungen. Des weiteren betrifft die vorliegende Erfindung ein Verfahren zur Herstellung der erfindungsgemäßen Elastomerformteile sowie die Verwendung dieser Elastomerformteile als Dämpfungselemente, z.B. eine Tragfeder für ein Motorlager.

Elastomerformteile finden z.B. als Dämpfungselemente vielfältige Anwendungen. Dieses gilt im verstärkten Maße für den Automobilbau. Solche Dämpfungselemente bzw. Elastomerformteile sind im Automobilbau regelmäßig besonders aggressiven Bedingungen ausgesetzt. Sie haben auch bei Dauerbelastung sowohl bei tiefen wie auch bei hohen Gebrauchstemperaturen stets das gewünschte Dämpfungsprofil zu erfüllen und dürfen zudem auch bei Belastungsspitzen nicht zur Rissbildung oder zu Ermüdungsbrüchen neigen. Für Elastomerformteile wird üblicherweise auf seit langem erprobte Materialien zurückgegriffen. Hierbei handelt es sich in der Regel um vernetzte, beispielsweise vulkanisierte Kautschuke. Als geeignete Ausgangsmaterialien werden häufig Naturkautschuk, Isopren-Kautschuk, Butadienkautschuk oder Styrol/Butadien-Kautschuk eingesetzt. Zu den synthetischen Kautschuken sind ferner sogenannte EPDM-Kautschuke zu zählen, die durch Terpolymerisation von Ethylen und Propylen mit einem Dien, vorzugsweise einem nicht konjugierten Dien, erhalten werden. EPDM-Kautschuke verfügen über eine gesättigte Polymerkette mit Doppelbindungen in der Seitenkette, welche mit Schwefel oder mit Peroxyden vulkanisiert, d.h. vernetzt werden können. Die aus EPDM-Kautschuken erhältlichen Elastomere zeichnen sich durch eine gute Chemikalienbeständigkeit sowie durch gute Witterungs-, Ozon- und Alterungsbeständigkeit aus. Gleichwohl haben sich Elastomerformteile aus EPDM-Kautschuken für Anwendungen im Automobil, beispielsweise zur Schwingungsentkopplung, nicht durchsetzen können. Die mechanischen und dynamischen Eigenschaften von Elastomeranteilen aus Standard-EPDM reichen normalerweise für den Einsatz als schwingungsdämpfende Bauteile, z.B. im Motorraum eines Automobils, nicht aus.

Gleichwohl wäre es schon aus Kostengründen wünschenswert, bisher zum Einsatz kommende Dämpfungselemente auf der Basis von Naturkautschuken oder von strukturanalogen Synthesekautschuken durch solche Elastomerformteile auf der Basis von EPDM-Kautschuken ersetzen zu können.

In der DE 10 2006 027 235 A1 werden Kautschukmischungen beschrieben, enthaltend mindestens einen Kautschuk, beispielsweise einen SBR-, NBR- oder EPDM-Kautschuk, mindestens einen oxidischen Füllstoff und mindestens ein Halogenorganylakylpolyethersilan. Derartige Kautschukmischungen sollen zu Elastomerformteilen mit verbessertem Weiterreißwiderstand führen.

Die DE 42 36 218 A1 befasst sich mit vulkanisierbaren Kautschukmischungen, bestehend aus einem EPDM-Kautschuk, einem üblichen Vemetzungssystem, einer spezifischen Alkoxysilanverbindung und einer Kieselsäure bzw. einem Silikat mit einer spezifischen Oberfläche von 5 bis 100 m²/g (BET-Absorption: ISO 5794/1, Annex D). Derartige Kautschukmischungen sollen solche Elastomerformteile zugänglich machen, deren Ermüdungsbeständigkeit und dynamische Eigenschaften denen des Naturkautschuks gleichwertig sind und die darüber hinaus ausgezeichnete Hitze- und Witterungsbeständigkeit besitzen.

In der US 5,710,218 werden vulkanisierbare Kautschukmischungen vorgestellt, enthaltend 40 bis 90 Gewichts-% an hochmolekularem EPDM-Kautschuk und 10 bis 60 Gewichts-% an niedrigmolekularem EPDM-Kautschuk sowie darin bei einer Temperatur im Bereich von 90 bis 160 °C homogen verteilten Schwefel. Auf dieser Weise sollen vulkanisierte Elastomerformteile zugänglich sein mit guten dynamischen Eigenschaften, guter Hitze- und Wetterbeständigkeit sowie wenig ausgeprägtem Ermüdungsverhalten.

Gemäß der US 2007/0244236 A1 kann ein Elastomerformteil mit guten Dämpfungseigenschaften bei Verwendung einer Kautschukmischung erhalten werden, welche neben dem Kautschuk Silika sowie ein Silankupplungsagenz der Formel Y₃-Si-Z-S-CO-R enthält. Hierin stehen Y für eine Acetoxy- oder Alkoxygruppe mit 1 bis 6 Kohlenstoffatomen, Z für eine Alkylengruppe mit 1 bis 8 Kohlenstoffatomen und R für eine Kohlenwasserstoffgruppe mit 1 bis 18 Kohlenstoffatomen.

Die US 6,693,145 B2 offenbart eine EPDM-Kautschukmischung, enthaltend Ruß, Schwefel, Tetramethylthiuramdisulfid und 2-Mercaptobenzotheazol. Schwefel sowie Tetramethylthiuramdisulfid haben in einem bestimmten Konzentrationsverhältnis vorzuliegen. Ferner hat das EPDM-Terpolymer einen Ethylengehalt im Bereich von 60 bis 80 Gewichts- % aufzuweisen. Derartige Kautschukmischungen sollen solche Elastomerformteile liefern, die gut aufeinander abgestimmte physikalische und dynamische Eigenschaften aufweisen.

In der WO 98/26001 A1 wird eine quervernetzte Elastomerzusammensetzung beschrieben, welche auf z.B. einem mit Silanen gepfropften EPDM-Terpolymer basiert. Derartige Elastomerprodukte zeigen einen geringen Abrieb und eignen sich beispielsweise für die Herstellung von Schuhsohlen.

Die US 2006/0189741 A1 befasst sich mit EPDM-Kautschuken, welche bei Bremssystemen von Automobilen zum Einsatz kommen und beständig gegenüber den in solchen Systemen verwendeten Bremsölen sind. Das gewünschte Eigenschaftsprofil für einen Bremsschlauch aus EPDM-Material wird erhalten, indem man den EPDM-Kautschuk in Gegenwart von Zink sowie einem Gemisch an Vukanisationsbeschleunigern vulkanisiert. Diese Vukanisationsbeschleuniger haben einerseits ausgewählt zu werden aus Thiazol- und Sulfenamid-Verbindungen und andererseits aus Thiocarbamat- und Thiuram-Verbindungen.

Elastomerformteile mit guter Alterungsbeständigkeit sind gemäß der US 4,645,793 erhältlich bei Verwendung von Mischungen aus einem hochmolekularen EPDM-Terpolymer und einem Polymer ausgewählt aus der Gruppe bestehend aus Polybutadien, SBR, cis-1,4-Polyisopren und Naturkautschuk. Das EPDM-Terpolymer hat in diesen Mischungen in Mengen von 17 bis 50 Gewichtsteilen vorzuliegen und eine Mooney-Viskosität der Größe 150 (ML 1 + 8 bei 100°C) aufzuweisen. Auch hat das Ethen/Propen-Gewichtsverhältnis im Bereich von 50 : 50 bis 75 : 25 zu liegen.

Die aus dem Stand der Technik bekannten sowie die kommerziell erhältlichen Elastomersysteme lassen noch stets Wünsche offen, insbesondere für Anwendungen im Automobil. Demgemäß lag der vorliegenden Erfindung die Aufgabe zugrunde, vorteilhafte Elastomerbauteile für die Schwingungsentkopplung, insbesondere im Automobil, verfügbar zu machen. Diese Elastomerformteile sollen in ihren mechanischen und dynamischen Eigenschaften solchen aus Naturkautschuk gefertigten Bauteilen nicht nachstehen. Demzufolge wurde eine kautschukmischung gefunden, enthaltend
a) mindestens ein hochmolekulares Ethylen-Propylen-Dien Terpolymer (EPDM), welches Metallocen-katalysiert mittels Gasphasenpolymerisation in Gegenwart von Ruß erhalten wurde (Komponente a)), wobei die Dien-Komponente des Terpolymers (EPDM) (Komponente a)) auf mindestens einem nicht konjugierten Dien, ausgewählt aus der Gruppe bestehend aus Dicyclopentadien, Ethylidennorbornen, Hexadien oder auf einer Mischung dieser Diene, insbesondere auf Ethylidennorbornen, basiert und wobei das Terpolymer (EPDM) einen Ethen-Gehalt im Bereich von 53 bis 59 Gew.-% und einen Dien-Gehalt im Bereich von 4 bis 7 Gew-% und ein Molekulargewicht Mw oberhalb von 70.000 aufweist,
b) niederstrukturierten Ruß (Komponente b)),
c) mindestens eine Kieselsäure und/oder mindestens ein Silikat (Komponente c)),
d) mindestens ein Silan (Komponente d)),
e) gegebenenfalls mindestens einen Weichmacher (Komponente e)),
f) gegebenenfalls mindestens einen Aktivator (Komponente f)),
g) Schwefel und/oder mindestens einen Schwefeldonor (Komponente g)),
h) gegebenenfalls mindestens einen Beschleuniger (Komponente h)).

Abweichend von herkömmlichen Herstellungsprozessen wird das hochmolekular EPDM-Terpolymer, das in den erfindungsgemäßen Kautschukmischungen zum Einsatz kommt, nicht mittels herkömmlicher Lösungspolymerisation gewonnen und ist demgemäß auch nicht mit größeren oder kleineren Mengen an Öl verstreckt. Hingegen haben die für die erfindungsgemäßen Kautschukmischungen zum Einsatz kommenden EPDM-Terpolymere gasphasenpolymerisiert hergestellt zu werden, wobei Metallocen-Katalysatoren zu verwenden sind. Solche geeigneten EPDM-Terpolymere sind beispielsweise unter der Produktbezeichnung Nordell MG von der Firma DuPont Dow Elastomers kommerziell erhältlich. Geeignete Angaben zur Herstellung von EPDM-Terpolymeren in der Gasphase mittels Metallocen-Katalyse findet man im übrigen auch in der US 5,585,184, WO 99/65956 A2, US 6,096,840 und US 6,545,088 B1.

Die Dien-Komponente des EPDM-Terpolymers (Komponente a)) basiert vorzugsweise auf mindestens einem nicht konjugierten Dien, beispielsweise auf Dicyclopentadien, Ethylidennorbonen oder Hexadien. Selbstverständlich können auch Mischungen dieser Diene bei der Herstellung der genannten Terpolymere eingesetzt werden. Besonders bevorzugt wird auf Ethylidennorbornen zurückgegriffen. In einer bevorzugten Ausgestaltung verfügt das EPDM-Terpolymer über einen Ethen-Gehalt im Bereich von 40 bis 70 Gewichts-%, insbesondere im Bereich von 50 bis 63 Gewichts- % und besonders bevorzugt im Bereich von 53 bis 59 Gewichts-%, beispielsweise 58 Gewichts-%. In einer weiteren zweckmäßigen Ausgestaltung liegt in den verwendeten EPDM-Terpolymeren der Dien-Gehalt im Bereich von 3 bis 10 Gewichts-%, insbesondere im Bereich von 4 bis 7 Gewichts-%.

Geeignete Resultate werden auch mit solchen EPDM-Terpolymeren erzielt, bei welchen die Metallocen-katalysierte Gasphasenpolymerisation in Gegenwart von Ruß vorgenommen wurde. Bei einer solchen Vorgehensweise enthält das isolierte EPDM-Terpolymer als solches bereits Ruß, üblicherweise 10 bis 40 phr an Ruß.

Die Angabe "phr" ("parts per hundred rubber") ist in der Kautschukindustrie zur Angabe der Mengenanteile von Mischungsbestandteilen gängig. Die Mengenanteile der Mischungskomponente werden dabei als Volumenanteile bezogen auf 100 Volumenanteile Kautschuk angegeben. Das Volumen an Kautschuk in der Kautschukmischung wird hierbei gleichgesetzt mit 100 phr.

Als hochmolekulare EPDM-Terpolymere im Sinne der vorliegenden Erfindung sollen solche Terpolymere mit einem Molekulargewicht Mw von mindestens 70.000 gelten. Bevorzugt liegt das Molekulargewicht der EPDM-Terpolymere oberhalb von 80.000, insbesondere im Bereich von Mw = 100.000 bis 500.000.

In einer weiteren Ausführungsform verfügt das EPDM-Terpolymer über weniger als 3 Gewichts-%, insbesondere weniger als 1,5 Gewichts-% an kristallinen Anteilen.

Bei der Komponente b), Ruß, kommt bevorzugt zumindest in Teilen so genannter niederstrukturierter Ruß zum Einsatz. Hingegen stellt der Ruß, welcher bei der Gasphasenpolymerisation, wie vorausgehend beschrieben, bei der Herstellung des EPDM-Terpolmers zugegen sein kann, vorzugsweise nicht niederstrukturierten Ruß dar. Vielmehr hat es sich als vorteilhaft erwiesen, hierfür Ruße mit hoher Struktur und insbesondere solche mit zugleich niedriger spezifischer Oberfläche einzusetzen, beispielsweise Ruß mit der Kennung N650. Niederstrukturierte Ruße sind beispielsweise unter der Kennung N772, N762, N754 oder N842 bekannt. Bei diesen Kennwerten handelt es sich um so genannte Kennzahlen gemäß ASTM D 1765, welche Aufschluss geben über die Rußstruktur sowie die spezifische Oberfläche.

Bei Kieselsäuren bzw. Silikaten, d.h. den Salzen der Kieselsäuren (Komponente c)) handelt es sich im Allgemeinen um hochpolare, hydrophile Feststoffe. Aufgrund der Hydrophilie enthalten Kieselsäuren üblicherweise an der Oberfläche absorbiertes Wasser, beispielsweise im Bereich von 4 bis 8 Gewichts-%. Geeignete Kieselsäuren liegen üblicherweise in Form amorpher Polykieselsäuren vor. Die für die erfindungsgemäßen Kautschukmischungen in Frage kommenden Kieselsäuren und Silikate sind kommerziell erhältlich, beispielsweise unter den Handelsbezeichnungen Perkasil KS300 sowie Perkasil KS408 als Kieselsäuren und unter Perkasil KS207 als Silikate (NaMgAl-Silikate).

Die in der erfindungsgemäßen Kautschukmischung zum Einsatz kommenden Kieselsäuren und Silikate sowie der gegebenenfalls verwendete Ruß (Komponente b)) verfügen vorzugsweise über eine durchschnittliche Partikelgröße kleiner 1 µm. Vorteilhafterweise weist auch der optional bei der Herstellung des EPDM-Terpolymers eingesetzte Ruß eine durchschnittliche Partikelgröße kleiner 1 µm auf.

Die für die erfindungsgemäßen Kautschukmischungen verwendeten Silane (Komponente d)) umfassen vorzugsweise Bis-3-(triethoxysilylpropyl)-tetrasulfan, 3-(Triethoxysilyl)-propanthiol, vorzugsweise zumindest partiell ethoxyliert mit Isotridecanol, 3-Octanoylthio-1-propyltriethoxysilan, Polybutadien, enthaltend Trimethoxysilylgruppen, oder Mischungen der genannten Silane umfasst. Derartige Silanverbindungen sind dem Fachmann bekannt und können auch kommerziell erhalten werden, beispielsweise unter der Bezeichnung Si69 (dA). Die Silanverbindungen reagieren während des Mischprozesses bei der Herstellung der erfindungsgemäßen Kautschukmischung mit den freien Hydroxylgruppen der Kieselsäure bzw. Silikate, wodurch die Oberfläche der Kieselsäuren und Silikate hydrophobiert werden. Die Reaktion der Silane mit den Hydroxygruppen der Kieselsäuren bzw. Silikate gelingt unter alkalischen sowie sauren Bedingungen besonders gut, insbesondere auch in Gegenwart von Wasser. In Abhängigkeit von den verwendeten Silanen können benachbart auf der Kieselsäure bzw. dem Silikat angedockte Silanverbindungen auch miteinander eine chemische Bindung im Wege einer Kondensationsreaktion eingehen.

Gemäß einer weiteren Ausführungsform kommen solche Silanverbindungen zum Einsatz, die darüber hinaus als Schwefeldonoren bei der Vulkanisation der erfindungsgemäßen Kautschukmischung eingesetzt werden können. Exemplarisch sei Bis-3-(triethoxysilypropyl)-tetrasulfan genannt, welches über eine Schwefelkette, enthaltend durchschnittlich vier Schwefelatome verfügt. Bei der Reaktion des Silians mit der Kieselsäure bzw. dem Silikat ist bei Verwendung derartiger Substanzen darauf zu achten, dass keine zu hohen Temperaturen bei der Herstellung der Kautschukmischung bzw. bei der Reaktion des Silans mit der Kieselsäure/dem Silikat auftreten. Denn ansonsten könnte die Vulkanisation vorzeitig gestartet werden und/oder Wechselwirkungen mit in der Kautschukmischung möglicherweise ebenfalls vorliegenden Beschleunigerverbindungen auftreten.

Optional können in der Kautschukmischung ferner auch so genannte Weichmacher (Komponente e)) verwendet werden. Hierbei kommen bevorzugt paraffinische, naphthenische oder aromatische Öle oder Wachse oder deren Mischungen zum Einsatz.

Weichmacher werden im Allgemeinen eingesetzt, um die Plastizität einer Kautschukmischung dahingehend zu verändern, dass sie nach der Zugabe besser verarbeitbar wird.

Optional können ferner Aktivatoren in der erfindungsgemäßen Kautschukmischung zugegen sein (Komponente f)). Aktivatoren dienen dem Zweck, die Effektivität der Vulkanisationsagention (Schwefel sowie Schwefeldonoren) und/oder der Vulkanisationsbeschleuniger zu erhöhen. Geeignete Aktivatoren umfassen z.B. Metalloxide wie Zinkoxid, Stearinsäure oder Mischungen dieser Komponenten.

Als Vernetzungsmittel (Komponente g)) kommt Schwefel oder eine Schwefel-Donor-Verbindung zum Einsatz. Geeignete Schwefel-Donor-Verbindungen stellen z. B. Dipenthamethylentetrasulfid (DPTT) und Dithio-bis-caprolactam (CLD) dar. Die aus den erfindungsgemäßen Kautschukmischungen erhaltenen Elastomerformteile stellen folglich ausschließlich solche dar, welche mittels Schwefel oder mit Hilfe eines Schwefel-Donors vulkanisiert worden sind.

In einer zweckmäßigen Ausführungsform kann die erfindungsgemäße Kautschukmischung ferner über so genannte Beschleuniger (Komponente h)) verfügen. Geeignete Beschleuniger für die Schwefel-Vulkanisation von EPDM-Terpolymeren umfassen im Sinne der vorliegenden Erfindung z. B. Dithiocarbamate, Thiurame, Thiazole, Sulfenamide oder Mischungen der vorangehend genannten Beschleunigerverbindungen. Besonders bevorzugt sind hierbei N-Cyclohexylbenzothiazol-2-sulfenamid, N-t-butyl-2-benzthiazyl-sulfenamid, Dipenthamethylenthiuramtetrasulfid, Tetramethythiuramdisulfid, Dimethyldiehenylthiuramidsulfid, Dibenzothiazyldisulfid, Zink-dibenzylditihocarbamat, Zink-dibutyldithiocarbamat oder eine Mischung der vorangehend genannten Verbindungen. Selbstverständlich können auch beliebige Mischungen der vorangehend genannten Beschleunigerverbindungen eingesetzt werden. Während die Thiocarbamate und Thiurame als sehr schnell bzw. schnelle Beschleuniger bekannt sind, stellen Thiazole und Sulfenamide so genannte mittlere Beschleuniger bzw. mittlere Beschleuniger mit verzögernder Wirkung dar.

Besonders bevorzugt werden auch Kombinationen an unterschiedlichen Beschleunigern eingesetzt. Exemplarisch sei die Kombination CBS/TMTD genannt, für die sich hinsichtlich der dynamischen Eigenschaften der erhaltenen vulkanisierten Elastomerformteile ein synergistischer Effekt einstellt.

Selbstverständlich kann die erfindungsgemäße Kautschukmischung weitere Hilfsstoffe enthalten. Exemplarisch seien Glimmer, Kreide, Kaolin, Talkum oder Mischungen dieser Hilfsstoffe genannt. Die durchschnittlichen Partikelgrößen dieser Hilfsstoffe liegen vorzugsweise im Bereich bis 30 µm, vorzugsweise im Bereich von 1 µm bis 10 µm.

Die der Erfindung zugrunde liegende Aufgabe wird des weiteren gelöst durch ein Verfahren zur Herstellung von Elastomerformteilen unter Verwendung der erfindungsgemäßen Kautschukmischungen, wie vorangehend beschrieben und in den Ansprüchen niedergelegt. Ein solches erfindungsgemäßes Verfahren umfasst hierbei die folgenden Schritte:
a) Zurverfügungstellung mindestens hochmolekularen Ethylen-Propylen-Dien Terpolymers (EPDM), welches Metallocen-katalysiert mittels Gasphasenpolymerisation erhalten wurde,
b) gegebenenfalls Zurverfügungstellung von Ruß,
c) Zurverfügungstellung von mindestens einer Kieselsäure und/oder Silikat,
d) Zurverfügungstellung mindestens eines Silans,
e) gegebenenfalls Zurverfügungstellung mindestens eines Weichmachers,
f) gegebenenfalls Zurverfügungstellung mindestens eines Aktivators,
g) Zurverfügungstellung von Schwefel und/oder mindestens eines Schwefeldonors und
h) gegebenenfalls Zurverfügungstellung mindestens eines Beschleunigers,
i) Vulkanisation des Terpolymers (Komponente a)) in Gegenwart der Komponenten c), d) und g) sowie gegebenenfalls auch b), e), f) und/oder h) und
j) Isolieren des nach der Vulkanisation erhaltenen Formteils, wobei man zunächst das EPDM Terpolymer (Komponente a)) und die Silanverbindung (Komponente d)) zumindest in Teilen vermischt und anschließend die Kieselsäure und/oder das Silikat, den Schwefel und/oder die Schwefel-Donor-Verbindung(en), insbesondere die Kieselsäure und/oder das Silikat, sowie gegebenenfalls Ruß, Weichmacher, Aktivator und/oder Beschleuniger zusetzt.

In einer besonders bevorzugten Ausgestaltung werden zunächst das EPDM-Terpolymer (Komponente a)) und die Silanverbindung (Komponente d)) vermischt. Anschließend können die Kieselsäure bzw. das Silikat, der Schwefel bzw. die Schwefel-Donor-Verbindung sowie gegebenenfalls Ruß, Weichmacher, Aktivator und Beschleuniger zugesetzt werden. Um eine hinreichende Hydrophobierung, d.h. chemische Anbindung des Silans an die Oberfläche der Kieselsäure bzw. Silikate zu erhalten, findet die Vermischung z.B. bei Temperaturen im Bereich von 140 bis 180°C, vorzugsweise bei Temperaturen von 150°C oder darüber statt. Hierbei ist von besonderem Vorteil, darauf zu achten, dass in Abhängigkeit von der jeweiligen Mischungskomponenten die Temperaturen nicht zu hoch gewählt werden, um nicht vorzeitig die Vulkanisation zu starten. Alternativ kann in einer besonders bevorzugten Ausführungsform vorgesehen sein, den Beschleuniger und/oder Aktivator erst nach der Vermengung von Silan und Kieselsäure bzw. Silikat und erfolgter Hydrophobierungsreaktion zuzugeben.

Die aus den erfindungsgemäßen Kautschukmischungen erhaltenen Elastomerformteile eignen sich z. B. für vielfältige dynamische Anwendungen, beispielsweise als Dämpfungselemente. Exemplarisch seien die Verwendung als Tragfeder, insbesondere für ein Motorlager, als Triebwerkslager oder als Hydrolager oder als Bestandteil der genannten Produkte genannt.

Erfindungsgemäße Kautschukmischungen können in einer vorteilhaften Ausgestaltung wie folgt aufgebaut sein:

| | |
|---|---|
| Komponente a) | 100 phr, gegebenenfalls enthaltend bis 50 phr Ruß, |
| Komponente b) | 0 bis 60 phr, insbesondere 10 bis 50 phr, |
| Komponente c) | 10 bis 50 phr, insbesondere 20 bis 40 phr, |
| Komponente d) | 1 bis 5 phr, insbesondere 1,5 bis 4 phr, |
| Komponente e) | 0 bis 70 phr, insbesondere 30 bis 60 phr, |
| Komponente f) | 0 bis 10 phr, insbesondere 0,5 bis 7 phr, |
| Komponente g) | 0,3 bis 8 phr, insbesondere 0,5 bis 5 phr, |

Komponente h) 0 bis 10 phr, insbesondere 0,5 bis 8 phr.

Gemäß einer besonders vorteilhaften Ausführungsform ist eine Kautschukmischung vorgesehen, enthaltend 100 phr an Komponente a), welche herstellungsbedingt bis zu 30 phr an Ruß enthält, 10 phr an Komponente b), 30 phr an Komponente c), 2,4 phr an Komponente d), 55 phr an Komponente e), 6,5 phr an Komponente f), 0,7 phr an Komponente g) und 3,0 phr an Komponente h), insbesondere Tetramethylthiuramdisulfid.

Mit den erfindungsgemäßen Kautschukmischungen lassen sich die Rohstoffkosten je nach Marktlage gegenüber Kautschukmischungen auf der Basis von Naturkautschuk von bis zu 45 % bis 50 % senken.

Die mit den erfindungsgemäßen Kautschukmischungen zugänglichen Elastomerformteile zeichnen sich durch besonders gute Wärmebeständigkeit und Dauerbelastbarkeit gerade auch bei erhöhten Temperaturen aus. Obwohl die thermische Belastung in Motorinnenräumen aufgrund zunehmender Isolierung steigt, können die erfindungsgemäßen Elastomerformteile auch unter diesen Bedingungen eingesetzt werden, ohne beschleunigten Alterungsprozessen zu unterliegen.

Tragfedern aus den erfindungsgemäßen Kautschukmischungen im Motorraum können die durch die Verbrennung und Massenkräfte erzeugten hochfrequenten Schwingungen des Motors isolieren und deren Einleitung in die Karosserie verhindern. Gleichzeitig halten solche Formteile bzw. Tragfedern auch den Motor in seiner vorbestimmten Position im Fahrzeug fest und helfen, niederfrequente Resonanzschwingungen (Lastschlag, Stuckern) zu vermeiden.

Ein weiterer Vorteil der erfindungsgemäßen Kautschukmischungen besteht in ihrer guten Verarbeitbarkeit, beispielsweise Extrudierbarkeit.

Interessanterweise lassen sich mit den erfindungsgemäßen Kautschukmischungen solche Elastomerformteile erhalten, die über eine hohe Lebensdauer, auch bei Dauerbelastung und aggressiven Bedingungen, ein gutes Setzverhalten und gute dynamische Eigenschaften verfügen, beispielsweise über eine Reißfestigkeit größer 10, insbesondere größer 15 MPa, eine Reißdehnung größer 350 %, insbesondere größer 400 %, einen Weiterreißwiderstand größer 5, insbesondere größer 8 und besonders bevorzugt größer 10 N/mm, einen Verlustwinkel (23°C) kleiner 10°, insbesondere kleiner 4,5°, einen Druckverformungsrest bei 23°C kleiner 12 %, insbesondere kleiner 7 % (22 h /23°C DBL) und einen Druckverformungsrest bei 125°C kleiner 60 %, insbesondere kleiner 50 % (22 h / 100°C DBL). Mit den erfindungsgemäßen Kautschukmischungen können zudem Elastomerformteile erhalten bzw. eingestellt werden, welche über eine Shore A-Härte im Bereich von 40 bis 60, insbesondere im Bereich von 50 bis 55, verfügen.

Das Setzverhalten eines vulkanisierten Probekörpers entspricht dem Weg, den der Probekörper über mehrere Tage bei erhöhter Temperatur unter einem definierten Druck nachgibt. Die verbleibende Verformung nach Entlastung und Abkühlung stellt den so genannten Setzwert dar und sollte so gering wie möglich sein.

## Patentansprüche

1. Kautschukmischung, enthaltend:
a) mindestens ein hochmolekulares Ethylen-Propylen-Dien Terpolymer (EPDM), welches Metallocen-katalysiert mittels Gasphasenpolymerisation in Gegenwart von Ruß erhalten wurde (Komponente a)), wobei die Dien-Komponente des Terpolymers (EPDM) (Komponente a)) auf mindestens einem nicht konjugierten Dien, ausgewählt aus der Gruppe bestehend aus Dicyclopentadien, Ethylidennorbornen, Hexadien oder auf einer Mischung dieser Diene, insbesondere auf Ethylidennorbornen, basiert und wobei das Terpolymer (EPDM) einen Ethen-Gehalt im Bereich von 53 bis 59 Gew.-% und einen Dien-Gehalt im Bereich von 4 bis 7 Gew-% und ein Molekulargewicht Mw oberhalb von 70.000 aufweist,
b) niederstrukturierten Ruß (Komponente b)),
c) mindestens eine Kieselsäure und/oder mindestens ein Silikat (Komponente c)),
d) mindestens ein Silan (Komponente d)),
e) gegebenenfalls mindestens einen Weichmacher (Komponente e)),
f) gegebenenfalls mindestens einen Aktivator (Komponente f)),
g) Schwefel und/oder mindestens einen Schwefeldonor (Komponente g)),
h) gegebenenfalls mindestens einen Beschleuniger (Komponente h)).

2. Kautschukmischung nach Anspruch 1, **dadurch gekennzeichnet, dass** das Terpolymer (EPDM) 10 bis 40 phr Ruß enthält.

3. Kautschukmischung nach Anspruch 1 oder 2, **dadurch gekennzeichnet, dass** das Terpolymer (EPDM) gemäß Komponente a) ein Molekulargewicht Mw im Bereich von Mw = 100.000 bis 500.000, aufweist.

4. Kautschukmischung nach einem der vorangehenden Ansprüche, **dadurch gekennzeichnet, dass** das Terpolymer weniger als 3 Gew-%, insbesondere weniger als 1,5 Gew-%, an kristallinen Anteilen aufweist.

5. Kautschukmischung nach einem der vorangehenden Ansprüche, **dadurch gekennzeichnet, dass** die Komponente b) und/oder die Komponente c) eine durchschnittliche Partikelgröße kleiner 1 µm aufweisen.

6. Kautschukmischung nach einem der vorangehenden Ansprüche, enthaltend:
| | |
|---|---|
| Komponente a) | 100 phr, gegebenenfalls enthaltend bis 50 phr Ruß, |
| Komponente b) | 10 bis 60 phr, insbesondere 10 bis 50 phr, |
| Komponente c) | 10 bis 50 phr, insbesondere 20 bis 40 phr, |
| Komponente d) | 1 bis 5 phr, insbesondere 1,5 bis 4 phr, |
| Komponente e) | 0 bis 70 phr, insbesondere 30 bis 60 phr, |
| Komponente f) | 0 bis 10 phr, insbesondere 0,5 bis 7 phr, |
| Komponente g) | 0,3 bis 8 phr, insbesondere 0,5 bis 5 phr, |
| Komponente h) | 0 bis 10 phr, insbesondere 0,5 bis 8 phr. |

7. Kautschukmischung nach einem der vorangehenden Ansprüche, ferner enthaltend mindestens einen Hilfsstoff ausgewählt aus der Gruppe bestehend aus Glimmer, Kreide, Kaolin, Talkum oder eine beliebige Mischung dieser Hilfsstoffe darstellt.

8. Kautschukmischung nach einem der vorangehenden Ansprüche, **dadurch gekennzeichnet, dass** die Komponente d) Bis-3-(triethoxysilylpropyl)-tetrasulfan, 3-(Triethoxysilyl)-propanthiol, vorzugsweise zumindest partiell ethoxyliert mit Isotridecanol, 3-Octanoylthio-1-propyltriethoxysilan, Polybutadien, enthaltend Trimethoxysilylgruppen, oder Mischungen der genannten Silane umfasst und/oder dass Komponente e) paraffinische, naphthenische oder aromatische Öle oder Wachse oder Mischungen dieser Öle oder Wachse umfasst und/oder dass die Komponente h) Dithiocarbamate, Thiurame, Thiazole, Sulfenamide oder Mischungen der vorangehend genannten Beschleunigerverbindungen umfasst und/oder dass die Komponente h) N-Cyclohexylbenzothiazol-2-sulfenamid, N-t-butyl-2-benzthiazyl-sulfenamid, Dipentamethylenthiuramtetrasulfid, Tetramethylthiuramdisulfid, Dimethyldiphenylthiuramdisulfid, Dibenzothiazyldisulfid, Zink-dibenzylditihocarbamat, Zink-dibutyldithiocarbamat oder eine Mischung der vorangehend genannten Verbindungen umfasst.

9. Elastomerformteil, erhältlich durch Vulkanisation der Kautschukmischung gemäß einem der vorangehenden Ansprüche.

10. Elastomerformteil nach Anspruch 9, **dadurch gekennzeichnet, dass** dieses ein Dämpfungselement oder einen Bestandteil hiervon, insbesondere im Automobilbau, oder eine Tragfeder, insbesondere für ein Motorlager, oder einen Bestandteil einer Tragfeder, insbesondere für ein Motorlager, darstellt.

11. Verfahren zur Herstellung eines Elastomerformteils gemäß Anspruch 9 oder 10, umfassend die folgenden Schritte:
a) Zurverfügungstellung mindestens hochmolekularen Ethylen-Propylen-Dien Terpolymers (EPDM), welches Metallocen-katalysiert mittels Gasphasenpolymerisation erhalten wurde,
b) gegebenenfalls Zurverfügungstellung von Ruß,
c) Zurverfügungstellung von mindestens einer Kieselsäure und/oder Silikat,
d) Zurverfügungstellung mindestens eines Silans,
e) gegebenenfalls Zurverfügungstellung mindestens eines Weichmachers,
f) gegebenenfalls Zurverfügungstellung mindestens eines Aktivators,
g) Zurverfügungstellung von Schwefel und/oder mindestens eines Schwefeldonors und
h) gegebenenfalls Zurverfügungstellung mindestens eines Beschleunigers,
i) Vulkanisation des Terpolymers (Komponente a)) in Gegenwart der Komponenten c), d) und g) sowie gegebenenfalls auch b), e), f) und/oder h) und
j) Isolieren des nach der Vulkanisation erhaltenen Formteils,
wobei man zunächst das EPDM Terpolymer (Komponente a)) und die Silanverbindung (Komponente d)) zumindest in Teilen vermischt und anschließend die Kieselsäure und/oder das Silikat, den Schwefel und/oder die Schwefel-Donor-Verbindung(en), insbesondere die Kieselsäure und/oder das Silikat, sowie gegebenenfalls Ruß, Weichmacher, Aktivator und/oder Beschleuniger zusetzt.

12. Verwendung der Kautschukmischung gemäß einem der Ansprüche 1 bis 8 für die Herstellung eines vulkanisierten Elastomerformteils.

13. Verwendung des Elastomerformteils nach Anspruch 9 oder 10 als Dämpfungselemente, insbesondere im Automobilbau, oder als Bestandteil hiervon oder als Tragfeder, insbesondere für ein Motorlager, oder als Bestandteil einer Tragfeder, insbesondere für ein Motorlager.

## Claims

1. A rubber mixture, containing:
a) at least one high-molecular ethylene propylene diene terpolymer (EPDM) which was obtained by means of metallocene-catalysed vapour-phase polymerization in the presence of carbon black (component a)), wherein the diene component of the terpolymer (EPDM) (component a)) is based on at least one non-conjugated diene selected from the group consisting of dicyclopentadiene, ethylidene norbornene, hexadiene or on a mixture of these dienes, in particular on ethylidene norbornene, and wherein the terpolymer (EPDM) has an ethene content ranging from 53 to 59 % by weight and a diene content ranging from 4 to 7 % by weight and a molecular weight Mw above 70,000,
b) low-structured carbon black (component b)),
c) at least one silicic acid and/or at least one silicate (component c)),
d) at least one silane (component d)),
e) at least one plasticizer (component e)) if appropriate,
f) at least one activator (component f)) if appropriate,
g) sulphur and/or at least one sulphur donor (component g)),
h) at least one accelerator (component h)) if appropriate.

2. A rubber mixture according to claim 1, **characterized in that** the terpolymer (EPDM) contains 10 to 40 phr of carbon black.

3. A rubber mixture according to claim 1 or 2, **characterized in that** the terpolymer (EPDM) according to component a) has a molecular weight Mw in the range of Mw = 100,000 to 500,000.

4. A rubber mixture according to any one of the preceding claims, **characterized in that** the terpolymer comprises less than 3 % by weight, in particular less than 1.5 % by weight, of crystalline components.

5. A rubber mixture according to any one of the preceding claims, **characterized in that** component b) and/or component c) have an average particle size of less than 1 µm.

6. A rubber mixture according to any one of the preceding claims, containing:
| | |
|---|---|
| component a) | 100 phr, containing up to 50 phr of carbon black if appropriate, |
| component b) | 10 to 60 phr, in particular 10 to 50 phr, |
| component c) | 10 to 50 phr, in particular 20 to 40 phr, |
| component d) | 1 to 5 phr, in particular 1.5 to 4 phr, |
| component e) | 0 to 70 phr, in particular 30 to 60 phr, |
| component f) | 0 to 10 phr, in particular 0.5 to 7 phr, |
| component g) | 0.3 to 8 phr, in particular 0.5 to 5 phr, |
| component h) | 0 to 10 phr, in particular 0.5 to 8 phr. |

7. A rubber mixture according to any one of the preceding claims, further containing at least one auxiliary agent which is selected from the group consisting of mica, chalk, kaolin, talcum or is any mixture of these auxiliary agents.

8. A rubber mixture according to any one of the preceding claims, **characterized in that** component d) comprises bis-(3-triethoxysilylpropyl)tetrasulfane, 3-(triethoxysilyl)propanethiol, preferably at least partially ethoxylated with isotridecanol, 3-octanoylthio-1-propyltriethoxysilane, polybutadiene, containing trimethoxysilyl groups, or mixtures of the aforesaid silanes, and/or that component e) comprises paraffinic, naphthenic or aromatic oils or waxes or mixture of these oils or waxes, and/or that component h) comprises dithiocarbamates, thiurames, thiazoles, sulfenamides or mixtures of the aforesaid accelerator compounds, and/or that component h) comprises N-cyclohexylbenzothiazol-2-sulfenamide, N-t-butyl-2-benzothiazyl sulfenamide, di-pentamethylenethiuramtetrasulfide, tetramethylthiruramdisulfide, dimethyldiphenylthiuramdisulfide, dibenzothiazyldisulfide, zinc dibenzyldithiocarbamate, zinc dibutyldithiocarbamate or a mixture of the aforesaid compounds.

9. An elastomer moulded part which can be obtained by vulcanizing the rubber mixture according to any one of the preceding claims.

10. An elastomer moulded part according to claim 9, **characterized in that** said part is a damping element or a component thereof, in particular in automobile construction, or a bearing spring, in particular for an engine bearing, or a component of a bearing spring, in particular for an engine bearing.

11. A method for producing an elastomer moulded part according to claim 9 or 10, comprising the steps of:
a) providing at least high-molecular ethylene propylene diene terpolymer (EPDM) which was obtained by means of metallocene-catalysed vapour-phase polymerization,
b) providing carbon black if appropriate,
c) providing at least one silicic acid and/or silicate,
d) providing at least one silane,
e) providing at least one plasticizer if appropriate,
f) providing at least one activator if appropriate,
g) providing sulphur and/or at least one sulphur donor, and
h) providing at least one accelerator if appropriate,
i) vulcanizing the terpolymer (component a)) in the presence of components c), d) and g) and, as the case may be, also b), e) f) and/or h), and
j) isolating the moulded part obtained by vulcanization,
wherein initially the EPDM terpolymer (component a)) and the silane compound (component d)) are mixed at least in parts, and subsequently the silicic acid and/or the silicate, the sulphur and/or the sulphur donor compound(s), in particular the silicic acid and/or the silicate, and, as the case may be, carbon black, the plasticizer, activator and/or accelerator are added.

12. The use of the rubber mixture according to any one of claims 1 to 8 for the production of a vulcanized elastomer moulded part.

13. The use of the elastomer moulded part according to claim 9 or 10 as damping elements, in particular in automobile construction, or as a component thereof or as a bearing spring, in particular for an engine bearing, or as a component of a bearing spring, in particular for an engine bearing.

## Revendications

1. Mélange de caoutchouc, contenant :
a) au moins un terpolymère éthylène-propylène-diène (EPDM) à haut poids moléculaire, qui a été obtenu (composant a)) par polymérisation en phase gazeuse catalysée par un métallocène en présence de suie, les composants diène du terpolymère (EPDM) (composant a)) étant basés sur au moins un diène non conjugué, sélectionné parmi le groupe constitué du dicyclopentadiène, de l'éthylidènenorbonène, de l'hexadiène ou sur un mélange de ces diènes, en particulier sur de l'éthylidènenorbonène, et le terpolymère (EPDM) présentant une teneur en éthène dans la plage de 53 à 59 % en poids et une teneur en diène dans la plage de 4 à 7 % en poids et un poids moléculaire Mw supérieur à 70 000,
b) de la suie sous structurée (composant b)),
c) au moins un acide silique et/ou au moins un silicate (composant c)),
d) au moins un silane (composant d)),
e) éventuellement au moins un plastifiant (composant e)),
f) éventuellement au moins un activateur (composant f)),
g) du soufre et/ou au moins un donneur de soufre (composant g)),
h) éventuellement au moins un accélérateur (composant h)).

2. Mélange de caoutchouc selon la revendication 1, **caractérisé en ce que** le terpolymère (EPDM) contient de 10 à 40 PCC (parties pour cent en caoutchouc) de suie.

3. Mélange de caoutchouc selon la revendication 1 ou 2, **caractérisé en ce que** le terpolymère (EPDM) présente conformément au composant a) un poids moléculaire Mw dans la plage de Mw = 100 000 à 500 000.

4. Mélange de caoutchouc selon l'une quelconque des revendications précédentes, **caractérisé en ce que** le terpolymère présente moins de 3 % en poids, en particulier moins de 1,5 % en poids, de parties cristallines.

5. Mélange de caoutchouc selon l'une quelconque des revendications précédentes, **caractérisé en ce que** le composant b) et/ou le composant c) présente(nt) une taille de particule moyenne inférieure à 1 µm.

6. Mélange de caoutchouc selon l'une quelconque des revendications précédentes, contenant :
| | |
|---|---|
| composant a) | 100 PCC, éventuellement contenant jusqu'à 50 PCC de suie, |
| composant b) | 10 à 60 PCC, en particulier 10 à 50 PCC, |
| composant c) | 10 à 50 PCC, en particulier 20 à 40 PCC, |
| composant d) | 1 à 5 PCC, en particulier 1,5 à 4 PCC, |
| composant e) | 0 à 70 PCC, en particulier 30 à 60 PCC, |
| composant f) | 0 à 10 PCC, en particulier 0,5 à 7 PCC, |
| composant g) | 0,3 à 8 PCC, en particulier 0,5 à 5 PCC |
| composant h) | 0 à 10 PCC, en particulier 0,5 à 8 PCC. |

7. Mélange de caoutchouc selon l'une quelconque des revendications précédentes, contenant en outre au moins un adjuvant sélectionné parmi le groupe constitué du mica, de la craie, du kaolin, du talc ou d'un mélange quelconque de ces adjuvants.

8. Mélange de caoutchouc selon l'une quelconque des revendications précédentes, **caractérisé en ce que** le composant d) comprend du bis-3-(triéthoxysilylpropyl)-tétrasulfane, du 3-(triéthoxysilyl)-propanethiol, de préférence au moins partiellement éthoxylé avec de l'isotridécanol, du 3-octanoylthio-1-propyltriéthoxysilane, du polybutadiène, contenant des groupes triméthoxysilyle, ou des mélanges des silanes cités et/ou le composant e) comprend des huiles paraffiniques, naphténiques ou aromatiques ou des cires ou des mélanges de ces huiles ou cires et/ou le composant h) comprend des dithiocarbamates, des thiurames, des thiazoles, des sulfénamides ou des mélanges des composés accélérateurs cités ci-dessus et/ou le composant h) comprend du N-cyclohexylbenzothiazol-2-sulfénamide, du N-t-butyl-2-benzothiazylsulfénamide, du tétrasulfure de dipentaméthylènethiurame, du disulfure de tétraméthylthiurame, du disulfure de diméthyldiphénylthiurame, du disulfure de dibenzothiazyl, du dibenzyldithiocarbamate de zinc, du dibutyldithiocarbamate de zinc ou un mélange des composés cités ci-dessus.

9. Pièce moulée en élastomère, pouvant être obtenue par vulcanisation du mélange de caoutchouc selon l'une quelconque des revendications précédentes.

10. Pièce moulée en élastomère selon la revendication 9, **caractérisée en ce que** celle-ci présente un élément amortisseur ou un constituant de celui-ci, en particulier dans le domaine de la construction automobile, ou un ressort de suspension, en particulier pour un support de moteur, ou un constituant d'un ressort de suspension, en particulier pour un support de moteur.

11. Procédé de fabrication d'une pièce moulée en élastomère selon la revendication 9 ou 10, comprenant les étapes suivantes :
a) fournir au moins un terpolymère éthylène-propylène-diène (EPDM) à haut poids moléculaire, qui a été obtenu par polymérisation en phase gazeuse catalysée par un métallocène,
b) fournir éventuellement de la suie,
c) fournir au moins un acide silique et/ou silicate,
d) fournir au moins un silane,
e) fournir éventuellement au moins un plastifiant,
f) fournir éventuellement au moins un activateur,
g) fournir du soufre et/ou au moins un donneur de soufre et
h) fournir éventuellement au moins un accélérateur,
i) vulcaniser le terpolymère (composant a)) en présence des composants c), d) et g) ainsi qu'éventuellement aussi b), e), f) et/ou h) et
j) isoler la pièce moulée obtenue après la vulcanisation,
le terpolymère EPDM (composant a)) et le composé silane (composant d)) étant initialement mélangés au moins pour partie et l'acide silique et/ou le silicate, le soufre et/ou le ou les composé(s) donneur(s) de soufre, en particulier l'acide silique et/ou le silicate, ainsi qu'éventuellement de la suie, un plastifiant, un activateur et/ou un accélérateur étant ajoutée(s) ensuite.

12. Utilisation du mélange de caoutchouc selon l'une quelconque des revendications 1 à 8 pour la fabrication d'une pièce moulée vulcanisée en élastomère.

13. Utilisation de la pièce moulée en élastomère selon la revendication 9 ou 10 en tant qu'éléments amortisseurs, en particulier dans le domaine de la construction automobile, ou en tant que constituants de ceux-ci ou en tant que ressort de suspension, en particulier pour un support de moteur, ou en tant que constituant d'un ressort de suspension, en particulier pour un support de moteur.
